# EUROPEAN PATENT APPLICATION

(11) **EP 4 576 410 A1**
(43) Date of publication of application: **25.06.2025**
(21) Application number: 23898118.7
(22) Date of filing: 06.11.2023
(51) Int. Cl.: H01M 50/591, H01M 50/588, H01M 50/24, H01M 50/502, H01M 50/204, H01M 50/516, H01M 10/658, H01M 50/249

(54) **BATTERY MODULE, AND BATTERY PACK AND VEHICLE COMPRISING SAME**

(30) Priority: 30.11.2022 KR 20220165173; 31.03.2023 KR 20230043131
(71) Applicant: LG Energy Solution, Ltd., Seoul 07335 (KR)
(72) Inventor: JUNG, Ki-Taek, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/017698
(87) International publication number: WO 2024/117586

(57) **Abstract**

Disclosed is a battery module, which includes a cell stack including a plurality of battery cells provided with electrode leads; a bus bar frame assembly including a bus bar electrically connected to the electrode lead and a bus bar frame on which the bus bar is seated, and configured to cover one side of the cell stack; and a fire resistant cover assembly including a fire resistant cover configured to cover the bus bar frame assembly and a metal member coupled to at least one of the electrode lead and the bus bar.

## Description

### TECHNICAL FIELD

The present disclosure relates to a battery module, and a battery pack and a vehicle including the same.

The present application claims priority to Korean Patent Application No. 10-2022-0165173 filed on November 30, 2022 in the Republic of Korea and Korean Patent Application No. 10-2023-0043131 filed on March 31, 2023 in the Republic of Korea, the disclosures of which are incorporated herein by reference.

### BACKGROUND ART

As the demand for portable electronic products such as notebook, video cameras and mobile phones is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. In addition, a plurality of battery modules may be connected to form one battery pack.

However, when a plurality of secondary batteries (battery cells) or a plurality of battery modules are crowded in a narrow space as above, they may be vulnerable to thermal events. In particular, if an event such as thermal runaway occurs in one battery cell, high temperature gas, flame, or heat may be generated. If such gas, flame, or heat is transferred to other battery cells or battery modules, an explosive chain reaction situation such as thermal propagation (TP) may occur.

Moreover, medium to large-sized battery packs such as electric vehicles include a large number of battery cells and battery modules to increase output and/or capacity, so the risk of thermal chain reaction may increase further. Further, in the case of a battery pack mounted on an electric vehicle or the like, a user such as a driver may be present near the battery pack. Therefore, if a thermal event occurring in a specific battery cell or module is not properly controlled and a chain reaction occurs, it may cause damage not only to significant property but also to human life.

In this respect, securing TP performance is currently a major topic in technology fields such as battery packs and modules for vehicles. In particular, it is difficult to secure TP performance in battery packs or modules that use pouch cells, and to solve this problem, it is necessary to develop a mechanical TP solution not only in securing the TP performance of the battery cell itself, but also in terms of the battery pack and battery module.

### DISCLOSURE

### Technical Problem

The present disclosure is designed to solve the problems of the related art, and therefore the present disclosure is directed to providing a battery module with an improved structure to provide an effective TP solution, and a battery pack and a vehicle including the battery module.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery module, comprising: a cell stack including a plurality of battery cells provided with electrode leads; a bus bar frame assembly including a bus bar electrically connected to the electrode lead and a bus bar frame on which the bus bar is seated, and configured to cover one side of the cell stack; and a fire resistant cover assembly including a fire resistant cover configured to cover the bus bar frame assembly and a metal member coupled to at least one of the electrode lead and the bus bar.

A welding portion that penetrates the metal member and the electrode lead and reaches the bus bar may be formed in an overlapping area of the metal member, the electrode lead and the bus bar.

The metal member may inserted and coupled into the fire resistant cover.

The metal member may be formed integrally with the fire resistant cover by insert injection.

The fire resistant cover may have a first extension portion configured to extend from a top end of the bus bar frame toward the cell stack and at least partially cover a top surface of the cell stack.

The battery cell may include an electrode assembly; a cell case configured to accommodate the electrode assembly; and the electrode lead connected to the electrode assembly and drawn to the outside of the cell case.

The cell case may include an accommodation portion in which the electrode assembly is accommodated; and a sealing portion extending outward from a circumference of the accommodation portion.

The first extension portion may extend to cover an area of the sealing portion corresponding to a terrace portion, which is an area located in a direction along which the electrode lead is drawn out.

The battery module may include a thermal barrier interposed between the fire resistant cover assembly and the bus bar frame assembly.

The thermal barrier may contain silicon.

The thermal barrier may have a barrier hole configured so that the metal member is inserted therein.

The metal member may have a thickness corresponding to the sum of a thickness of the fire resistant cover and a thickness of the thermal barrier.

The battery module may include a module housing configured to accommodate the cell stack and have an open portion formed in a direction along which the electrode lead is drawn out.

The bus bar frame assembly may be configured to cover the open portion.

The module housing may have a venting portion formed at a surface facing a bottom surface of the cell stack.

According to an embodiment of the present disclosure, there is also provided a battery pack, comprising the battery module according to an embodiment of the present disclosure.

According to an embodiment of the present disclosure, there is also provided a vehicle, comprising the battery pack according to an embodiment of the present disclosure.

### Advantageous Effects

According to an embodiment of the present disclosure, the heat propagation suppression performance of the battery module may be improved.

According to another embodiment of the present disclosure, the fastening structure of the fire resistant cover attached to the front surface of the bus bar frame may be made more robust.

According to still another embodiment of the present disclosure, directional venting may be possible, thereby reducing the risk of venting to unexpected points.

According to still another embodiment of the present disclosure, the process of fixing the fire resistant cover and the process of electrically connecting the battery cells may be performed at the same time, thereby improving assemblyability and productivity.

According to still another embodiment of the present disclosure, there is no need to prepare a separate fixing structure and apply fastening members such as screws and bolts to fix the fire resistant cover.

According to the present disclosure, a battery module and its application device with improved safety from thermal events may be provided. In particular, when the battery module according to the present disclosure is applied to a vehicle, the safety of occupants may be more effectively guaranteed.

However, the beneficial effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is a diagram showing a structure in which a fire resistant cover assembly of the present disclosure is coupled to a combination of an electrode lead and a bus bar.
FIG. 3 is a diagram showing a structure in which a welding portion is formed to penetrate each component in an overlapping area of a metal member, the electrode lead, and the bus bar, unlike FIG. 2.
FIG. 4 is a drawing showing a structure in which an extension portion is provided to a fire resistant cover assembly of the present disclosure.
FIG. 5 is a diagram showing a structure in which the extension portion provided to the fire resistant cover assembly of the present disclosure covers an area corresponding to a terrace portion of a battery cell.
FIG. 6 is a diagram showing an exemplary form of a battery cell of the present disclosure.
FIG. 7 is a diagram showing a structure in which a thermal barrier is additionally applied to the fire resistant cover assembly.
FIG. 8 is a diagram showing the positional relationship between the metal member, the thermal barrier, the electrode lead, and the bus bar in the battery module shown in FIG. 7.
FIG. 9 is a drawing showing a module housing and an end plate applied to the battery module of the present disclosure.
FIG. 10 is a drawing showing a structure in which the venting portion is provided to the module housing of the present disclosure.
FIG. 11 is a diagram showing a structure in which the venting portion provided to the module housing of the present disclosure is formed in the area corresponding to the terrace portion of the battery cell.
FIG. 12 is a diagram showing a battery pack according to an embodiment of the present disclosure.
FIG. 13 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

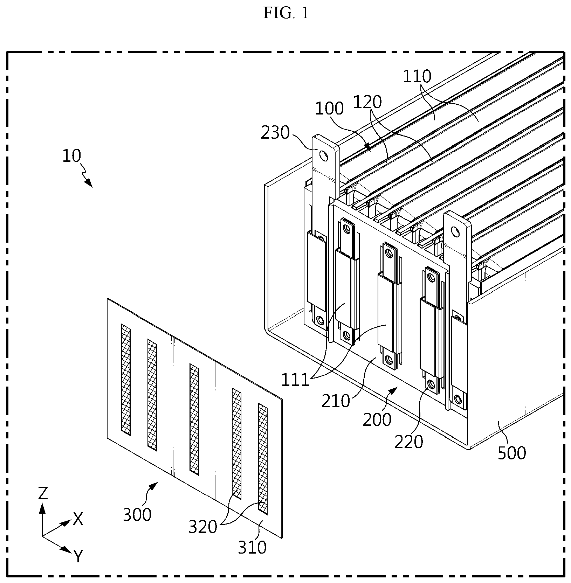

Referring to FIG. 1, a battery module 10 according to an embodiment of the present disclosure may include a cell stack 100, a bus bar frame assembly 200, and a fire resistant cover assembly 300.

The cell stack 100 may include a plurality of battery cells 110 provided with electrode leads 111. The battery cell 110 may be, for example, a pouch-type battery cell. The cell stack 100 may include a pad 120 interposed between adjacent battery cells 110. The pad 120 may be configured to absorb volume expansion due to swelling of the battery cell 110. Considering this function, the pad 120 may contain a material with elasticity. The pad 120 may contain a fire resistant material. The pad 120 may contain a material with low thermal conductivity, and thus may function as a thermal barrier that delays heat transfer between battery cells 110 adjacent to each other. The pad 120 may have an area corresponding to the battery cell 110.

The bus bar frame assembly 200 may include a bus bar 220 electrically connected to the electrode lead 111 and a bus bar frame 210 on which the bus bar 220 is seated. The bus bar frame assembly 200 may be configured to cover one side of the cell stack 100. The bus bar frame 210 may be configured to cover one side of the cell stack 100. The bus bar frame 210 may contain a non-conductive material.

When the battery module 10 of the present disclosure includes the pad 120, the bus bar frame 210 may include a pad insert portion configured so that an end of the pad 120 inserted therein in a longitudinal direction (direction parallel to the X-axis). In this case, the pad 120 may be configured to cover an end in the longitudinal direction (direction parallel to the X-axis) of the battery cell 110, and as a result, heat transfer between a pair of adjacent battery cells 110 may be effectively blocked by the pad 120.

The bus bar 220 may be provided in plurality depending on the number of battery cells 110 to be electrically connected. The bus bar 220 may be located at a side opposite to the cell stack 100 with the bus bar frame 210 being interposed therebetween. The electrode lead 111 may pass through a slit formed in the bus bar frame 210 and be coupled to the bus bar 220. For example, a pair of electrode leads 111 provided in each of one pair of battery cells 110 adjacent to each other may be coupled to one bus bar 220, so that a pair of battery cells 110 adjacent to each other are electrically connected to each other.

The bus bar frame assembly 200 may be provided as a pair. In this case, the pair of bus bar frame assemblies 200 may be configured to cover one side and the other side of the cell stack 100, respectively. At least one of the pair of bus bar frame assemblies 200 may include a terminal 230. The terminal 230 may be provided as a pair. Depending on the electrical connection method of the plurality of battery cells 110 constituting the battery module 10 of the present disclosure, a pair of terminals 230 may be provided in one bus bar frame assembly 200, or each of the pair of terminals 230 may be provided in each of the pair of bus bar frame assemblies 200 one by one. For example, the terminal 230 may be electrically coupled to the electrode lead 111 of a battery cell 110 disposed at the outermost side among the plurality of battery cells 110 constituting the cell stack 100. The terminal 230 may be directly coupled to the bus bar frame 210, or alternatively, may be coupled to the bus bar 220 coupled onto the bus bar frame 210.

The fire resistant cover assembly 300 may include a fire resistant cover 310 and a metal member 320. The fire resistant cover 310 may be configured to cover the bus bar frame assembly 200. If the bus bar frame assembly 200 is provided as a pair, the fire resistant cover assembly 300 may also be provided as a pair. The fire resistant cover 310 may be configured to protect and support the bus bar frame 210 in a high temperature environment when a thermal event occurs. The fire resistant cover 310 may be configured to have a higher melting point compared to the bus bar frame 210. The fire resistant cover 310 may contain, for example, a fire resistant resin. The fire resistant cover 310 may have an area equal to or larger than the area of the bus bar frame 210 facing the fire resistant cover 310, thereby preventing the bus bar frame 210 from being exposed to the outside of the fire resistant cover 310.

The metal member 320 may be coupled to the fire resistant cover 310. The metal member 320 may be inserted and coupled into the fire resistant cover 310. The metal member 320 may be formed integrally with the fire resistant cover 310 by insert injection. The metal member 320 may contain a conductive metal. The metal member 320 may contain aluminum, for example. The metal member 320 may be provided in plurality.

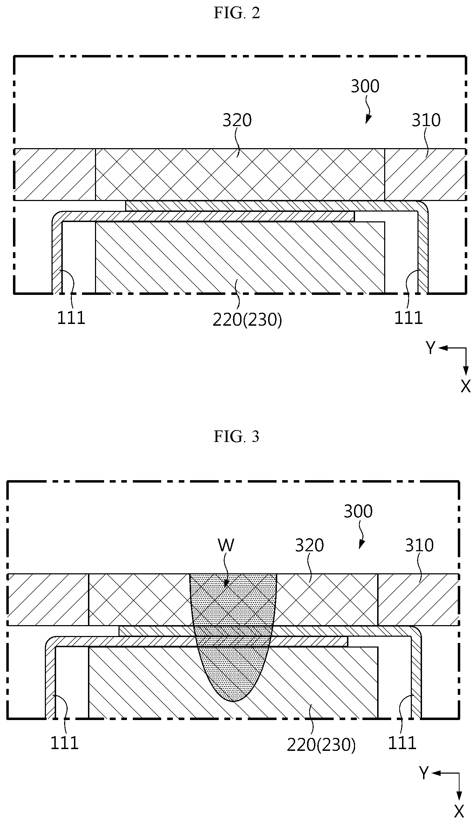

Referring to FIGS. 1 and 2, the metal member 320 may be coupled to at least one of the electrode lead 111 and the bus bar 220. The metal member 320 may be coupled to an external terminal 230. In this case, the metal member 320 may be coupled by additional welding on a combination of the bus bar 220 and the electrode lead 111, which is formed in advance by welding, or on a combination of the external terminal 230 and the electrode lead 111, which is formed in advance by welding.

Referring to FIG. 3, unlike the above, a welding portion W that penetrates the metal member 320 and the electrode lead 111 and reaches the bus bar 220 (or the terminal 230) may be formed in the overlapping area of the metal member 320, the electrode lead 111, and the bus bar 220 (or the terminal 230). According to this structure, both the electrical connection between components and the fixation of the fire resistant cover assembly 300 may be achieved together through a single welding process for coupling the bus bar 220 (or the terminal 230), the electrode lead 111, and the metal member 320.

In the drawings of this application, only the case where the metal member 320 is exposed to the outside through the outer surface of the fire resistant cover 310 is shown, but the present disclosure is not limited thereto. The metal member 320 may be configured to be exposed only through the surface facing the bus bar frame assembly 200 among both surfaces of the fire resistant cover 310. In this case, there is no risk of unnecessary electrical connections on the outer surface of the fire resistant cover 310, namely on the surface opposite to the surface facing the bus bar frame assembly 200.

As described above, since the battery module 10 according to an embodiment of the present disclosure includes the fire resistant cover assembly 300 configured to cover the bus bar frame assembly 200, it is possible to prevent the bus bar frame 210 from structurally collapsing in a high temperature environment due to a thermal event or the like, or it is possible to delay the collapse time. In another aspect, since the battery module 10 according to an embodiment of the present disclosure is configured such that the metal member 320 provided in the fire resistant cover assembly 300 is coupled with a component containing a metal component provided in the bus bar frame assembly 200, even after the bus bar frame 210 is damaged, it is possible to prevent high temperature gas and/or flame from moving from the cell stack 100 to the outside or from the outside toward the cell stack 100.

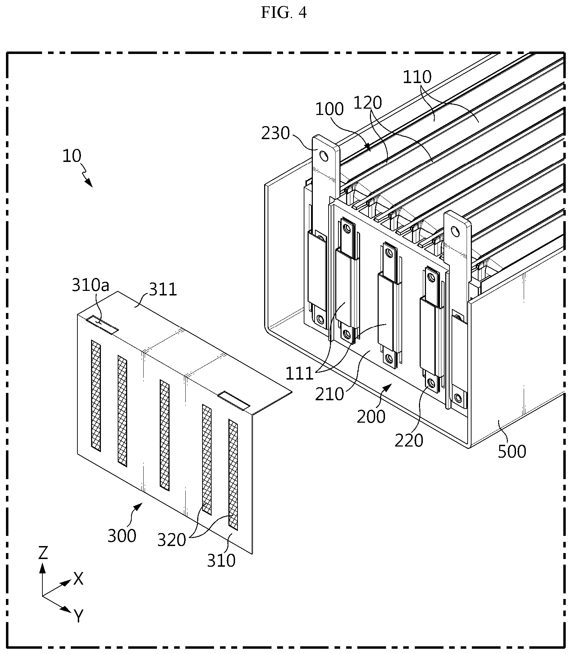

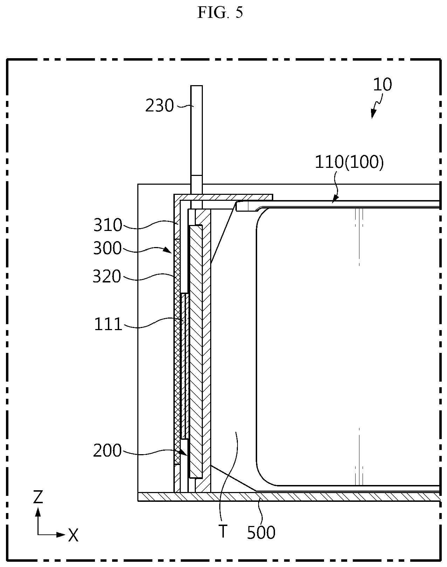

Next, referring to FIGS. 4 and 5, the battery module 10, which further includes additional elements compared to the battery module according to the former embodiment, is shown. The battery module 10 is different from the battery module according to the former embodiment in terms of the structure of the fire resistant cover 310.

In the battery module 10, the fire resistant cover 310 may include a first extension portion 311. The first extension portion 311 may be configured to extend from the top end of the bus bar frame 210 toward the cell stack 100 and at least partially cover the top surface (a surface parallel to the X-Y plane) of the cell stack 100. When the first extension portion 311 is provided, it is possible to prevent or suppress a venting gas generated at one end in the longitudinal direction (direction parallel to the X-axis) of the battery cell 110 from being ejected upward from the cell stack 100.

The first extension portion 311 may extend so that the terrace portion T (see FIG. 5) corresponding to an area located in a direction along which the electrode lead 111 is drawn out among the entire area of the sealing portion 12b of the battery cell 110 is not exposed above the cell stack 100.

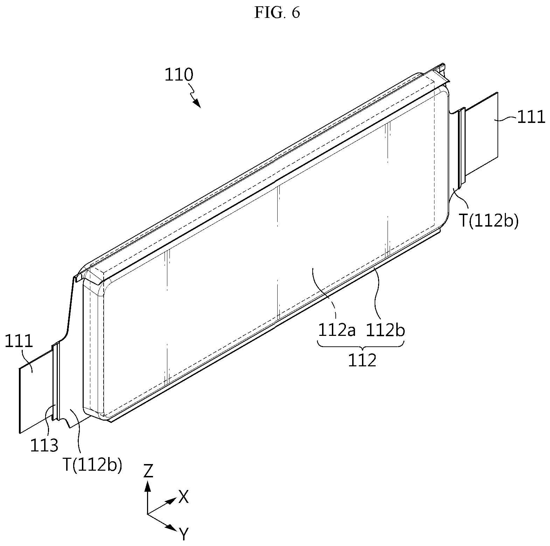

Referring to FIG. 6 along with FIGS. 4 and 5, the battery cell 110 may include an electrode assembly (not shown), a cell case 112 configured to accommodate the electrode assembly, and an electrode lead 111 connected to the electrode assembly and configured to be drawn to the outside of the cell case 112. The battery cell 110 may include a lead film 113 configured to partially surround the electrode lead 111 and interposed in the sealing area of the electrode lead 111 and the cell case 112. The battery cell 110 may be a pouch-type battery cell as described above. The electrode leads 111 may be provided as a pair, and in this case, as shown in the drawings of this application, the pair of electrode leads 111 may be drawn out from the cell case 112 in opposite directions. However, the present disclosure, is not limited thereto, and the pair of electrode leads 111 may also be drawn out in the same direction.

When the pair of electrode leads 111 are drawn out in the same direction, one bus bar frame assembly 200 may be provided. When the pair of electrode leads 111 are drawn out in opposite directions, a pair of bus bar frame assemblies 200 may be provided.

The cell case 112 may include an accommodation portion 112a configured to accommodate the electrode assembly, and a sealing portion 112b extending outward from the periphery of the accommodation portion 112a. Among the entire area of the sealing portion 112b, the area located in a direction along which the electrode lead 111 is drawn out may be defined as the terrace portion T, as described above. As shown in the drawings of this application, when the planar shape of the cell case 112 is approximately rectangular, for example, the entire area from one end at one side of the sealing area 112b formed at the edge of the cell case 112 to the other end thereof may be referred to as the terrace portion T.

Since the terrace portion T corresponds to an area in which the electrode lead 111 is drawn out, the structure of the joint area between the upper case and the lower case constituting the cell case 112 may not be flat like the remaining sealing area but may have a curved shape. Due to this structural characteristic, the terrace portion T may fracture at an earlier time compared to the remaining sealing portion 112b when the internal pressure of the battery cell 110 increases. Further, in the pouch-type battery cell 110, there may be a gas collection space between the terrace portion T and the electrode assembly (not shown) where gas generated inside the battery cell 110 may collect. Therefore, venting may preferentially occur in the terrace portion T due to the pressure of the gas collected in the gas collection space. In the case where the venting gas is discharged through the terrace portion T, the first extension portion 311 may suppress the venting gas from being directed upward (Z-axis positive direction) of the battery module 10, which may induce directional venting.

The first extension portion 311 may be in close contact with the top end of the cell stack 100. In the battery cell 110, the sealing portion 112b located at the side of the sealing portion 112b of the cell case 112, namely the sealing portion 112b located at both ends in the height direction (direction parallel to the Z axis) of the cell stack 100, may be folded to face the accommodation portion 112a. The first extension portion 311 may be configured to come into close contact with the sealing portion 112b folded as above.

As described above, when the cell stack 100 of the present disclosure includes the pad 120, the height of the pad 120 (length along the Z-axis direction) may correspond to the height of the cell stack 100. In this case, the first extension portion 311 may be configured to come into close contact with the top end of each of the battery cells 110 and the pad 120 constituting the cell stack 100.

Since the first extension portion 311 is configured to be in close contact with the top end of the cell stack 100 as above, it is possible to more reliably prevent the venting gas discharged through the terrace portion T from leaking upward from the cell stack 100. By doing so, it is possible to maximize the directional venting effect.

Meanwhile, the fire resistant cover 310 may have a first accommodation portion 310a configured to accommodate the terminal 230. In the case where the battery module 10 of the present disclosure is provided with a terminal 230, a hole through which the terminal 230 may pass may need to be formed in the fire resistant cover 310 depending on the extension direction and/or extension length of the terminal 230. The first accommodation portion 310a may be a hole having a shape corresponding to the terminal 230. One or two first accommodation portions 310a may be provided depending on the number of terminals 230. Depending on the extension direction and/or length of the terminal 230, the first accommodation portion 310a may be formed in the first extension portion 311 or may be formed in an area other than the first extension portion 311.

When the fire resistant cover 310 is provided with the first accommodation portion 310a, the fire resistant cover assembly 300 may be coupled to the combination of the cell stack 100 and the bus bar frame assembly 200 through the terminal 230 containing a metal material. Therefore, even if damage occurs to the bus bar frame 210 in a high temperature environment, the disposed position of the fire resistant cover assembly 300 may be maintained. In addition, if the first accommodation portion 310a is provided, when performing the process of welding the metal member 320 with the electrode lead 111 and/or the bus bar 220, the process of aligning the positions of welding targets may be facilitated, thereby increasing productivity and improving quality.

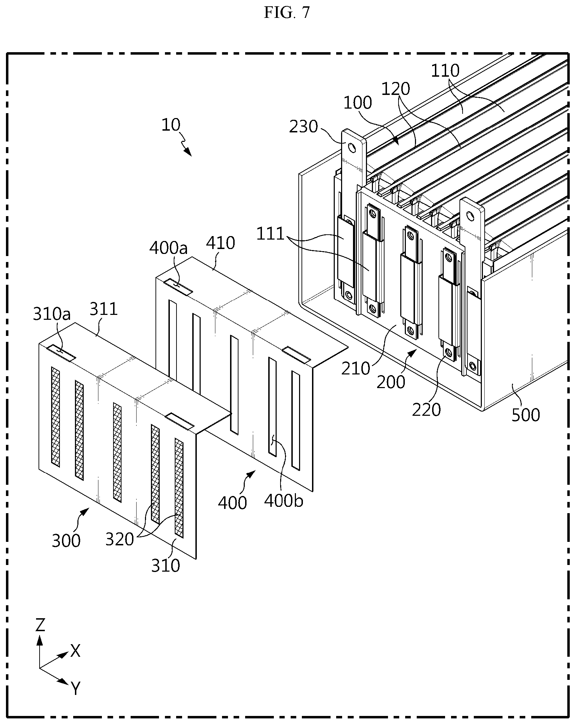

Next, referring to FIG. 7, the battery module 10, which further includes a thermal barrier 400 compared to the former embodiments, is shown. The battery module 10 may include a thermal barrier 400 interposed between the fire resistant cover assembly 300 and the bus bar frame assembly 200. The thermal barrier 400 may be configured to minimize heat transfer between the cell stack 100 and the battery module 10 in a high temperature environment due to a thermal event. The thermal barrier 400 may contain silicon, for example. If the bus bar frame assembly 200 is provided as a pair, the thermal barrier 400 may also be provided as a pair.

The thermal barrier 400 may include a second extension portion 410. The second extension portion 410 may be configured to extend from the top end of the bus bar frame 210 toward the cell stack 100 and at least partially cover the top surface (a surface parallel to the X-Y plane) of the cell stack 100. If the second extension portion 420 is provided, it is possible to prevent or suppress the venting gas generated at one end in the longitudinal direction (direction parallel to the X-axis) of the battery cell 110 from being ejected upward from the cell stack 100.

The second extension portion 410 may be extended to prevent the terrace portion T (see FIG. 5), which corresponds to the area located in a direction along which the electrode lead 111 is drawn out among the entire area of the sealing portion 112b of the battery cell 110, from being exposed above the cell stack 100. In the case where the venting gas is discharged through the terrace portion T, the second extension portion 410 may suppress the venting gas from being directed upward (in the positive Z-axis direction) of the battery module 10, which may induce directional venting.

The second extension portion 410 may be in close contact with the top end of the cell stack 100. In the battery cell 110, the sealing portion 112b located at the side among the sealing portions 112b of the cell case 112, namely the sealing portions 112b located at both ends in the height direction (direction parallel to the Z-axis) of the cell stack 100, may be folded to face the accommodation portion 112a. The second extension portion 410 may be configured to come into close contact with the sealing portion 112b folded as above.

As described above, when the cell stack 100 of the present disclosure includes the pad 120, the height of the pad 120 (length along the Z-axis direction) may correspond to the height of the cell stack 100. In this case, the second extension portion 410 may be configured to come into close contact with the top end of each of the battery cells 110 and the pad 120 constituting the cell stack 100.

Since the second extension portion 410 is configured to be in close contact with the top end of the cell stack 100 as above, it is possible to more reliably prevent the venting gas discharged through the terrace portion T from leaking upward from the cell stack 100. By doing so, it is possible to maximize the directional venting effect.

Meanwhile, in the battery module 10 of the present disclosure, when both the first extension portion 311 of the fire resistant cover 310 and the second extension portion 410 of the thermal barrier 400 are provided, the first extension portion 311 may be configured to at least partially cover the second extension portion 410. In this case, when the first extension portion 311 and the second extension portion 410 overlap, it is possible to more reliably prevent the venting gas from moving upward from the cell stack 100.

The thermal barrier 400 may have a second accommodation portion 400a configured to accommodate the terminal 230. In the case where the battery module 10 of the present disclosure is provided with the terminal 230, a hole through which the terminal 230 may pass may need to be formed in the thermal barrier 400 depending on the extension direction and/or extension length of the terminal 230. One or two second accommodation portions 400a may be provided depending on the number of terminals 230. Depending on the extension direction and/or length of the terminal 230, the second accommodation portion 400a may be formed in the second extension portion 410, or may be formed in an area other than the second extension portion 410.

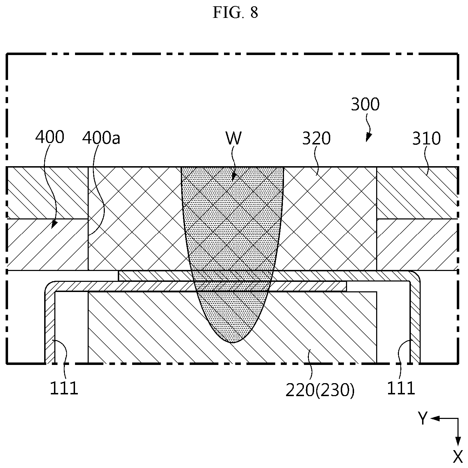

Referring to FIGS. 7 and 8, the thermal barrier 400 may include a barrier hole 400b configured so that the metal member 320 of the fire resistant cover assembly 300 is inserted therein. The barrier hole 400b may be provided in a number corresponding to the number of metal members 320. The barrier hole 400b may have a shape corresponding to the shape of the metal member 320. The metal member 320 of the fire resistant cover assembly 300 may pass through the barrier hole 400b of the thermal barrier 400 and be coupled with the electrode lead 111 and/or the bus bar 220. The metal member 320 may have a thickness corresponding to the sum of the thickness of the fire resistant cover 310 and the thickness of the thermal barrier 400. In this case, when the metal member 320 is coupled with the electrode lead 111 and/or the bus bar 220, the fire resistant cover assembly 300, the thermal barrier 400, and the electrode lead 111 (or the bus bar 220) may be in close contact with each other, which may prevent dead space from occurring.

As described above, when the battery module 10 of the present disclosure includes both the fire resistant cover assembly 300 and the thermal barrier 400, thermal propagation may be more effectively limited. Meanwhile, the close contact structure between the fire resistant cover 310 and the thermal barrier 400 may minimize the decrease in energy density due to additional application of components.

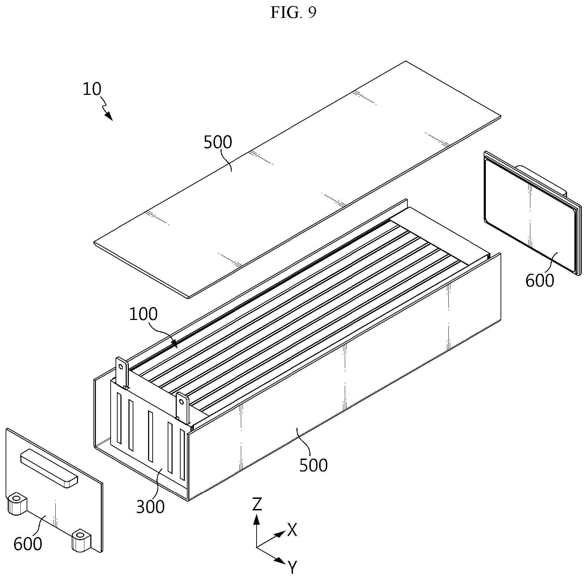

Next, referring to FIG. 9, a module housing 500 and an end plate 600 provided in the battery module 10 of the present disclosure are shown.

The module housing 500 may be configured to accommodate the cell stack 100, or the combination of the cell stack 100 and the bus bar frame assembly 200. The module housing 500 may have an open portion formed in a direction along which the electrode lead 111 is drawn out. The open portion may be provided at one side or both sides of the module housing 500 in the longitudinal direction (direction parallel to the X-axis). The bus bar frame assembly 200 described above may be configured to cover the open portion of the module housing 500. The drawings of this application show only the case where the module housing 500 is configured in two pieces, but the present disclosure is not limited thereto. For example, the module housing 500 may be an integrated housing provided with an open portion.

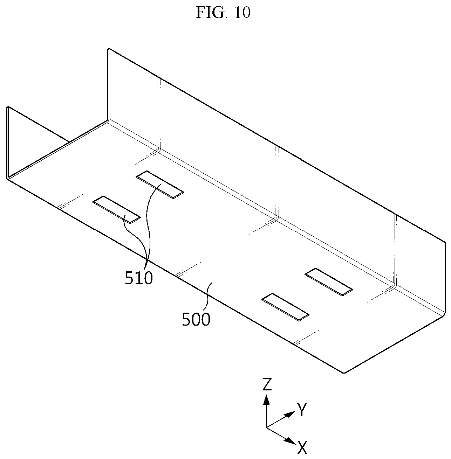

Referring to FIG. 10 along with FIG. 9 , the module housing 500 may include a venting portion 510 formed at a surface facing the bottom surface (surface parallel to the X-Y plane) of the cell stack 100. The venting portion 510 may be formed, for example, by partially reducing the thickness of the plate constituting the module housing 500. However, the structure of the venting portion 510 is not limited thereto, and the venting portion 510 may be formed by applying a material that is weaker than the surrounding area in the module housing 500. In addition, the venting portion 510 may be a valve that is installed to penetrate the module housing 500 and is configured to open when the internal pressure is higher than a critical pressure. The valve may be a one-way valve configured to be opened only from the inside of the battery module 10 toward the outside. One venting portion 510 or a plurality of venting portions 510 may be provided.

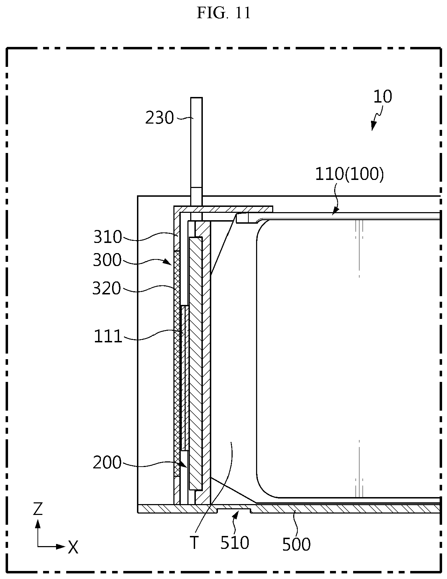

Referring to FIG. 11, the venting portion 510 may be provided at a position corresponding to the terrace portion T of the battery cell 110. In the case where the fire resistant cover 310 of the present disclosure is configured to cover the area corresponding to the terrace portion T at the upper portion of the cell stack 100 and also the venting portion 510 is provided at a position corresponding to the terrace portion T at the bottom surface of the module housing 500, the directional venting inducing effect may be increased. In addition, the rapidity of gas discharge may also be improved.

Referring to FIG. 9 again, the end plate 600 may be configured to cover the open portion of the module housing 500 in a state where the combination including the cell stack 100, the bus bar frame assembly 200, and the fire resistant cover assembly 300 is accommodated in the module housing 500. The end plate 600 may be provided in a number corresponding to the number of open portions provided in the module housing 500.

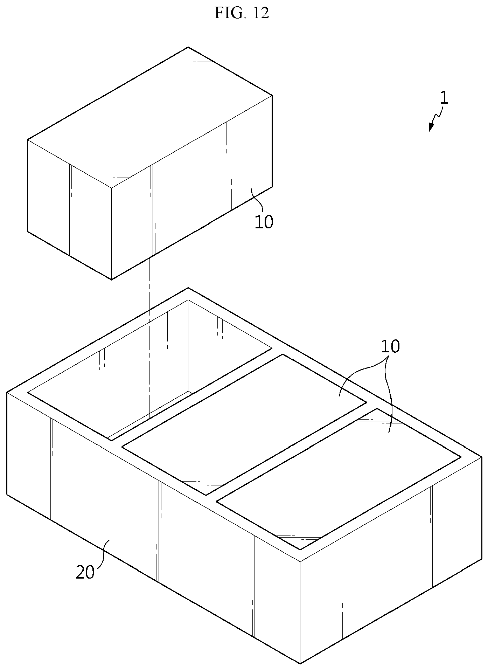

Referring to FIG. 12, a battery pack 1 according to an embodiment of the present disclosure includes the battery module 10 according to an embodiment of the present disclosure. The battery pack 1 may include a pack housing 20 configured to accommodate the battery module 10. However, the battery pack 1 of the present disclosure is not limited thereto. The battery pack 1 may include a plurality of battery modules 10. In this case, the plurality of battery modules 10 may be electrically connected to each other.

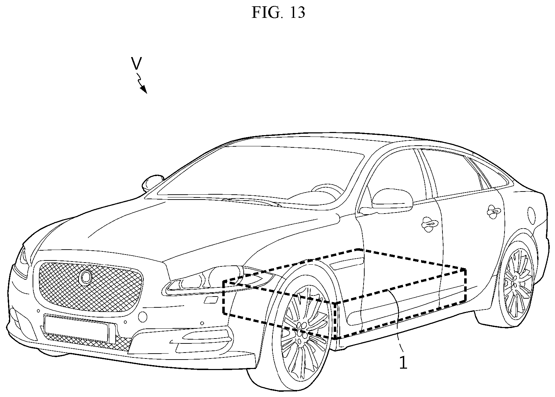

Referring to FIG. 13, a vehicle V according to an embodiment of the present disclosure includes the battery pack 1 according to an embodiment of the present disclosure. The vehicle V may be configured to operate by receiving power from the battery pack 1. The vehicle V may be, for example, an electric vehicle (EV) or a hybrid electric vehicle (HEV).

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

V: vehicle
1: battery pack
20: pack housing
10: battery module
110: battery cell
111: electrode lead
112: cell case
112a: accommodation portion
112b: sealing portion
T: terrace portion
113: lead film
120: pad
200: bus bar frame assembly
210: bus bar frame
220: bus bar
230: terminal
300: fire resistant cover assembly
310: fire resistant cover
310a: first accommodation portion
311: extension portion
320: metal member
W: welding portion
400: thermal barrier
410: second extension portion
400a: second accommodation portion
400b: barrier hole
500: module housing
510: venting portion
600: end plate

## Claims

1. A battery module, comprising:
a cell stack including a plurality of battery cells provided with electrode leads;
a bus bar frame assembly including a bus bar electrically connected to the electrode lead and a bus bar frame on which the bus bar is seated, and configured to cover one side of the cell stack; and
a fire resistant cover assembly including a fire resistant cover configured to cover the bus bar frame assembly and a metal member coupled to at least one of the electrode lead and the bus bar.

2. The battery module according to claim 1,
wherein a welding portion that penetrates the metal member and the electrode lead and reaches the bus bar is formed in an overlapping area of the metal member, the electrode lead and the bus bar.

3. The battery module according to claim 1,
wherein the metal member is inserted and coupled into the fire resistant cover.

4. The battery module according to claim 1,
wherein the metal member is formed integrally with the fire resistant cover by insert injection.

5. The battery module according to claim 1,
wherein the fire resistant cover has a first extension portion configured to extend from a top end of the bus bar frame toward the cell stack and at least partially cover a top surface of the cell stack.

6. The battery module according to claim 5,
wherein the battery cell includes an electrode assembly; a cell case configured to accommodate the electrode assembly; and the electrode lead connected to the electrode assembly and drawn to the outside of the cell case, and
wherein the cell case includes an accommodation portion in which the electrode assembly is accommodated; and a sealing portion extending outward from a periphery of the accommodation portion.

7. The battery module according to claim 6,
wherein the first extension portion extends to cover an area of the sealing portion corresponding to a terrace portion, which is an area located in a direction along which the electrode lead is drawn out.

8. The battery module according to claim 1,
wherein the battery module includes a thermal barrier interposed between the fire resistant cover assembly and the bus bar frame assembly.

9. The battery module according to claim 8,
wherein the thermal barrier contains silicon.

10. The battery module according to claim 8,
wherein the thermal barrier has a barrier hole configured so that the metal member is inserted therein.

11. The battery module according to claim 10,
wherein the metal member has a thickness corresponding to the sum of a thickness of the fire resistant cover and a thickness of the thermal barrier.

12. The battery module according to claim 1,
wherein the battery module includes a module housing configured to accommodate the cell stack and have an open portion formed in a direction along which the electrode lead is drawn out.

13. The battery module according to claim 12,
wherein the bus bar frame assembly is configured to cover the open portion.

14. The battery module according to claim 13,
wherein the fire resistant cover has a first extension portion configured to extend from a top end of the bus bar frame toward the cell stack and at least partially cover a top surface of the cell stack, and
wherein the module housing has a venting portion formed at a surface facing a bottom surface of the cell stack.

15. A battery pack, comprising the battery module according to any one of claims 1 to 14.

16. A vehicle, comprising the battery pack according to claim 15.
